# FASCICULE DE BREVET EUROPEEN

(11) **EP 1 097 796 B1**
(45) Date de publication et mention de la délivrance du brevet: **02.04.2003**
(21) Numéro de dépôt: 00403040.9
(22) Date de dépôt: 02.11.2000
(51) Int. Cl.: B29C 63/06, F16L 59/153

(54) **Procédé pour entourer une gaine par une couche de mousse, et complexe tubulaire avec gaine entourée**
Verfahren zum Umwickeln einer Hülle mit einer Schaumschicht und rohrförmiger Komplex mit umgewickelter Hülle
Process for wrapping a sheath with a foam layer, and tubular complex with wrapped sheath

(30) Priorité: 05.11.1999 FR 9913879; 11.01.2000 FR 0000254
(43) Date de publication de la demande: 09.05.2001
(73) Titulaire: Alphacan, 78170 La Celle-Saint-Cloud (FR)
(72) Inventeur: Moreau, André, 27120 Aigleville (FR); Tremillon, Jean-Michel, 78290 Croissy sur Seine (FR)
(74) Mandataire: Michardière, Bernard

(56) Documents cités:
- EP-A- 0 126 308
- DE-A- 1 915 768
- FR-A- 2 225 681
- FR-A- 2 372 690
- FR-A- 2 573 275
- FR-A- 2 689 698
- US-A- 3 974 862
- US-A- 4 637 756
- PATENT ABSTRACTS OF JAPAN vol. 009, no. 107 (M-378), 11 mai 1985 (1985-05-11) & JP 59 230721 A (DAINICHI NIPPON DENSEN KK), 25 décembre 1984 (1984-12-25)

## Description

L'invention est relative à un procédé pour entourer une gaine en matière plastique pouvant contenir un tube qui peut être tiré dans cette gaine, par une couche de mousse de matière plastique, en particulier isolante thermiquement.

Il est connu d'utiliser des tubes de cuivre enrobés de mousse de matière plastique. Toutefois, le tube de cuivre est rigide, ce qui pose des problèmes lors de l'installation. L'enrobage du tube de cuivre est généralement obtenu par coextrusion en tête d'équerre. Avec un tel procédé, la mousse de matière plastique colle fortement au tube. L'installateur, pour effectuer un raccordement, doit éliminer l'enrobage de mousse sur une certaine longueur, ce qui n'est pas aisé en raison de la forte adhérence de la mousse au tube. De plus, l'appareillage de coextrusion en tête d'équerre implique un investissement élevé.

Lorsqu'un tel tube de cuivre enrobé de mousse est noyé dans une dalle ou une chape de béton ( par exemple pour l'alimentation en fluide caloporteur d'appareils à fonction thermique comme des ventilo-convecteurs ou des collecteurs d'un chauffage au sol pour des locaux d'habitation, des bureaux, etc.), il n'est pas possible de remplacer le tube par simple tirage. En effet, la coextrusion en tête d'équerre implique des températures élevées (de l'ordre de 180°C - 200°C) pour l'application de la mousse, ce qui ne permet pas de placer une gaine thermoplastique entre le tube de cuivre et la mousse de façon à permettre un échange du tube de cuivre par tirage en cas de besoin .

La possibilité de remplacer le tube est importante. Si le tube ne peut pas être remplacé, il fait partie de la garantie décennale ce qui entraîne une assurance coûteuse ; par contre, si le tube peut être remplacé, la garantie est biennale et entraîne une assurance moins coûteuse.

Avec le procédé en tête d'équerre, si l'on veut que la mousse ne colle pas trop au tube qui défile, il faut prévoir un corps intermédiaire à l'interface mousse / tube, tel qu'une graisse ou une huile silicone, ce qui n'est pas facile à réaliser.

Le procédé en tête d'équerre est en outre gourmand en énergie car le tube à recouvrir défile dans l'équerre et évacue des calories.

On connaît d'après FR 2 372 690 un procédé pour la fabrication de tubes équipés d'une enveloppe isolante en mousse synthétique. Une bande de mousse synthétique est déroulée à partir d'une bobine et est réchauffée puis mise en forme dans une sorte d'entonnoir, en laissant toutefois subsister un espace constituant un joint de l'ébauche. Le tube est tiré d'une bobine et introduit par le joint ménagé sur l'ébauche. Selon un tel procédé la bande est pré-formée avec un réchauffage de sa paroi interne : ce réchauffage peut provoquer un collage contre la paroi interne empêchant toute possibilité de glissement de l'enveloppe formée par la bande, relativement au tube ainsi entouré. En outre la mise en place du tube dans l'ébauche apparaît délicate, notamment dans le cas d'un élément tubulaire de diamètre relativement important, tel qu'une gaine dans laquelle un tube peut être tiré.

JP 59 230721 concerne un procédé pour entourer un tube par une bande de mousse de matière plastique; une couche extérieure est extrudée autour de l'ensemble du tube et de son enveloppe en mousse. Il sera donc difficile de repousser ou de découper l'enveloppe de mousse puisqu'il faudra, au préalable, dégager la couche extérieure. En outre, aucun glissement de la couche de mousse relativement au tube n'apparaît possible.

DE 1915768 A concerne un procédé et un dispositif pour fabriquer des objets tabulaires à partir d'une mousse de résine thermoplastique. On part d'une bande de mousse et on l'enroule autour d'un axe longitudinal, avec chauffage des bords pour les souder. Dans une variante , un noyau cylindrique est prévu pour la phase d'enroulement. Si le noyau est flexible , il peut être extrait du tube par une fente. Il est aussi possible de conserver le noyau constitué par exemple d'un tube de cuivre. Une couche de matière isolante thermiquement peut en outre être prévue. Aucune indication n'est fournie pour éviter l'adhérence de l'enveloppe de mousse au tube intérieur.

L'invention a pour but de fournir un procédé pour entourer une gaine par une couche de mousse de matière plastique qui permette d'éviter une adhérence trop élevée de la couche à l'élément. Il est souhaitable que le procédé permette aussi d'éviter des températures élevées pour l'application de la mousse de telle sorte que cette dernière puisse être utilisée autour de gaines en matière thermoplastique, en particulier d'une gaine pouvant contenir un tube qui peut être tiré dans la gaine.

Il convient en outre que le procédé soit économique et d'une mise en oeuvre simple et fiable.

Ce tout est atteint par le procédé de la revendication 1.

Avantageusement, la gaine est annelée. De préférence, l'enveloppe de mousse est réalisée étanche aux laitiers de ciment. La gaine peut être en polychlorure de vinyle (PVC), ou polypropylène (PP) ou polyéthylène(PE).

Le procédé se déroule en continu. Pour cela, on fait défiler la gaine, on fait défiler la bande à la même vitesse , on réalise l'application de la bande autour de la gaine en un emplacement déterminé et, en aval de cet emplacement, on réalise le soudage ou le collage des bords longitudinaux de la bande.

La bande peut être préparée par extrusion de mousse à proximité de la gaine à entourer.

La gaine à entourer et la bande sont avantageusement tirées en appui l'une contre l'autre, en particulier à partir de bobines qui sont déroulées, et la bande est appliquée autour de la gaine en traversant un dispositif en forme d' entonnoir comportant une fente longitudinale dans une zone correspondant aux bords longitudinaux en appui de la bande ; les bords de la bande sont soudés au droit de cette fente , tandis que des rouleaux de contact sont prévus en aval de la zone de soudure.

La gaine peut contenir un tube , en particulier en polyéthylène réticulé, qui peut être tiré dans cette gaine.

Le soudage des bords de la bande de mousse peut être réalisé par soufflage d'air chaud.

La bande de mousse peut être en mousse de polyuréthane ou en mousse de PEHD (polyéthylène haute densité) non réticulé.

En variante, la bande de mousse est en PE (polyéthylène) extrudé à l'état non réticulé, avec ingrédients nécessaires à la réticulation, laquelle se produit dans la bande de mousse mise en forme, par hydrolyse, par exemple à l'air ambiant.

L'invention concerne également un complexe tubulaire tel que décrit dans la revendication 13, comportant une enveloppe en mousse de matière plastique et, à l'intérieur de l'enveloppe, une gaine en matière plastique serrée sans collage de l'enveloppe, la gaine pouvant contenir un tube qui peut être tiré dans cette gaine.

La gaine peut comporter à l'intérieur, sur toute sa longueur, un fil de traction, en particulier un fil d'acier.

Le complexe tubulaire peut comporter en outre un tube disposé à l'intérieur de la gaine dans laquelle il peut coulisser.

L'enveloppe en mousse peut avoir été obtenue par un procédé tel que défini précédemment.

Le serrage exercé par l'enveloppe de mousse est suffisant pour que la gaine ne glisse pas lors des manipulations d'un installateur, en particulier suffisant pour que l'enrobage de mousse reste en place lorsque la gaine est disposée debout.

L'invention consiste, mises à part les dispositions exposées ci-dessus, en un certain nombre d'autres dispositions dont il sera plus explicitement question ci-après à propos d'exemples de réalisation décrits avec référence aux dessins ci-annexés, mais qui ne sont nullement limitatifs.

La figure 1, de ces dessins, est une vue en bout d'un tube et d'une bande de mousse qui va servir à entourer le tube.

La figure 2 est une vue également en bout du tube entouré de la bande de mousse dont les bords longitudinaux sont en cours de soudage.

La figure 3 est une vue schématique en plan de l'enrobage du tube par la bande et de la zone de soudage des bords.

La figure 4 est une vue schématique en élévation d'une installation pour la mise en oeuvre du procédé selon l'invention.

La figure 5 est une vue en perspective à plus grande échelle d'une partie de l'installation de Fig.4

La figure 6 montre, partie en coupe longitudinale et partie en extérieur, le complexe tubulaire d'une enveloppe en mousse de matière plastique, d'une gaine annelée située à l'intérieur de cette enveloppe et d'un tube logé dans la gaine.

La figure 7, enfin, est un schéma illustrant la compression de l'enveloppe de mousse pour dégager l'extrémité du tube intérieur.

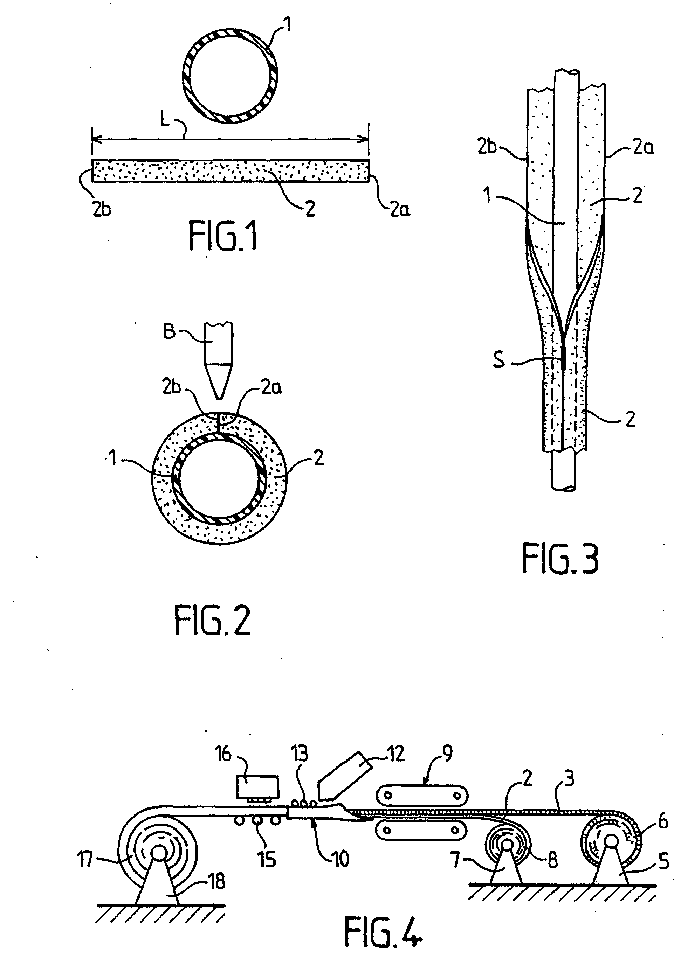

En se reportant à la figure 1 des dessins, on peut voir un tube 1 , en particulier en PE réticulé (polyéthylène réticulé) flexible, pouvant servir à l'alimentation en fluide caloporteur, généralement de l'eau, d'appareils à fonction thermique comme des ventilo-convecteurs, ou des collecteurs d'un chauffage au sol pour des locaux d'habitation, des bureaux, etc..., mais aussi pour des installations de distribution d'eau chaude ou froide sanitaire.

Une bande 2 de mousse de matière plastique est prévue pour entourer le tube 1 avec un léger serrage. La longueur de la bande 2 est perpendiculaire au plan de Fig. 1. Sa largeur L est sensiblement égale au périmètre de la section du tube 1, légèrement supérieure à ce périmètre lorsque les traitements ultérieurs provoquent un rétrécissement de la largeur de la bande.

Comme illustré sur Fig.2, on applique la bande 2, suivant sa largeur, autour du tube 1 avec un serrage relatif du tube et on met en contact les bords longitudinaux 2a , 2b de la bande.

On assemble ensuite par soudage ou collage les deux bords longitudinaux 2a, 2b.

La soudure des bords 2a, 2b, est avantageusement réalisée par un soufflage d'air chaud à l'aide d'une buse B dans une zone S de soudage. En variante, on peut utiliser une " soudure au miroir " ; le miroir est constitué par une lame métallique chauffée électriquement et placée entre les deux bords 2a, 2b à raccorder ; quand la température de soudage est atteinte, le miroir est enlevé et les deux bords 2a, 2b, sont appliqués l'un contre l'autre.

Il est également possible de réaliser l'assemblage des deux bords 2a, 2b par collage. Dans ce cas on peut mettre en place dans la zone S un compte-gouttes doseur alimenté en colle contact, par exemple du type isocyanate. Les gouttes de colle tombent entre les bords 2a, 2b en cours de rapprochement et se font écraser par ces bords 2a, 2b lorsqu'ils viennent en contact ce qui provoque le collage.

Le soudage produit une fusion et donc l'élimination de cellules de mousse d'où un rétrécissement. Dans le cas d'un collage, la colle rentre dans des cellules de la mousse et, comme la mousse est comprimée sur ses bords en contact, les cellules sont figées par collage à l'état comprimé ce qui produit une diminution de volume.

Le serrage du tube 1, et plus généralement de l'élément cylindrique ou prismatique entouré par la couche de mousse 2, prend en compte ces effets.

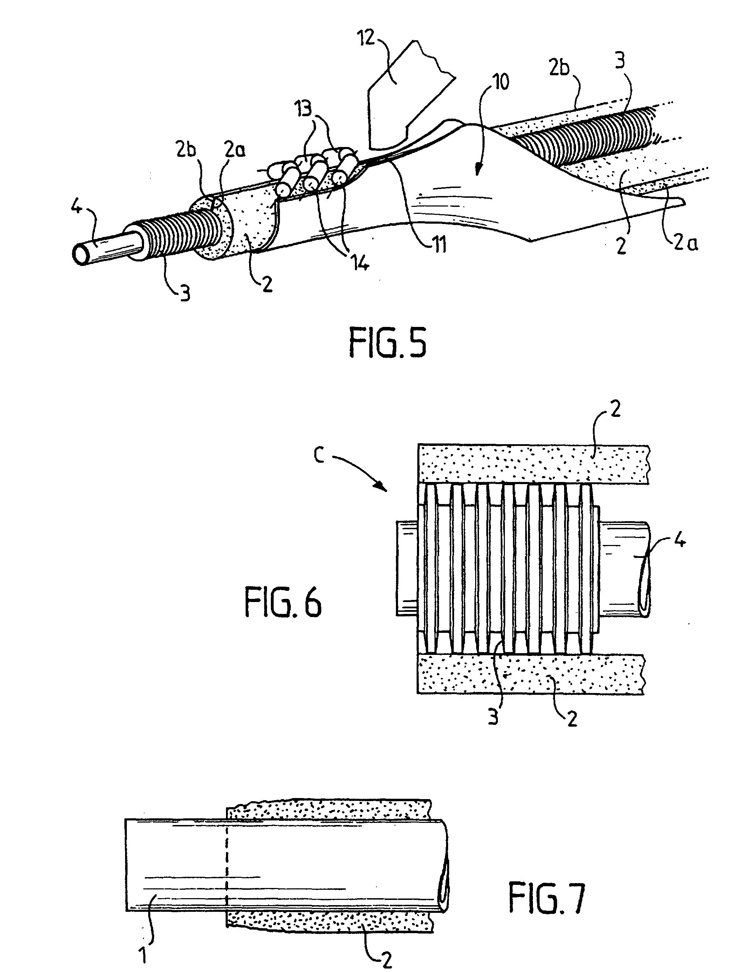

Le serrage est suffisant pour que l'enveloppe de mousse 2 autour du tube 1 ne glisse pas lors des manipulations de l'installateur. En particulier la couche 2 de mousse doit rester contre le tube 1, sans glisser, lorsque le tube 1 est placé debout vertical. Le serrage n'a pas besoin d'être trop important afin de permettre à un installateur de dégager facilement l'extrémité du tube 1 en comprimant, ou en dégageant, la couche de mousse 2 sur une certaine longueur comme illustré sur Fig.7.

La figure 4 illustre plus en détail le procédé pour réaliser un complexe tubulaire C (Fig.6) par association de trois composants, à savoir l'enveloppe 2 extérieure en mousse de matière plastique, une gaine 3 entourée par cette enveloppe, et un tube 4 situé à l'intérieur de la gaine. La gaine 3 peut être annelée comme illustré sur Fig.6 . Le tube 4 est avantageusement en polyéthylène réticulé tandis que la gaine 3 est généralement en polypropylène (PP).

Un tel ensemble C est destiné à être noyé dans une chape de béton pour l'alimentation en fluide caloporteur, généralement de l'eau, d'appareils à fonction thermique, ou pour l'alimentation en eau chaude et froide d'appareils sanitaires . La chape est rapportée sur une dalle pleine et réalisée en mortier de ciment ou en béton sur une épaisseur d'environ 6 à 15 cm. L'enveloppe 2 en mousse de matière plastique a principalement une fonction d'isolation thermique.

Le tube 4, comme la gaine 3 et l'enveloppe 2, est flexible et peut coulisser dans la gaine 3 de sorte que ce tube 4 peut être échangé si nécessaire. Le tube 4 peut être introduit dans une gaine 3 et une enveloppe 2 déjà noyées dans une chape ou une dalle.

La gaine 3 entourée par l'enveloppe 2 en mousse peut comporter à l'intérieur, sur toute sa longueur, un fil de traction, en particulier un fil d'acier. La mise en place ultérieure d'un tube caloporteur dans une telle gaine installée et recouverte par une chape est alors facilitée , le fil permettant de tirer le tube dans la gaine. Cette gaine avec fil, de préférence annelée, est généralement désignée par l'expression "gaine aiguillée isolée". Elle est avantageusement préparée sous forme de couronnes.

Pour réaliser l'ensemble C de Fig.6, on procède avantageusement comme illustré sur Figs.4 et 5.

Un premier dévidoir 5 reçoit une bobine 6 de gaine annelée 3. Cette gaine 3 peut être vide intérieurement ou contenir un tube 4 de polyéthylène réticulé.

Un autre dévidoir 7 est muni d'une bobine 8 d'une bande 2 de mousse isolante, l'axe de rotation des deux dévidoirs 5 et 7 étant parallèles.

La bande 2 est déroulée sous la gaine 3 contre celle-ci. L'ensemble est tiré, de la droite vers la gauche de Fig.4, par une tireuse 9 comportant deux chenilles qui serrent entre elles la bande 2 et la gaine 3 et qui tournent dans le sens convenable pour assurer l'entraînement.

En aval de la tireuse 9 est prévu un dispositif 10 en forme d'entonnoir qui comporte des surfaces de guidage inclinées et relevées formant des rampes pour appliquer la bande 2 autour de la gaine 3. Le dispositif 10 comporte, à sa partie supérieure, une fente longitudinale 11 au droit de la ligne d'appui des bords 2a, 2b de la bande 2 qui restent donc accessibles depuis l'extérieur. Un dispositif de soudure 12, par exemple une buse de soudure soufflant de l'air chaud, est prévu au droit de la fente 11 pour la réunion des bords 2a, 2b. En variante, le dispositif de soudure peut être constitué par une lame métallique chaude, également appelée miroir, disposée entre les bords à souder.

En aval du dispositif de soudure 12, la fente 11 s'élargit pour permettre à des rouleaux 13, 14 d'entrer en contact avec la surface supérieure de l'enveloppe 2, de part et d'autre de la ligne de soudure. Sur le schéma de Fig.5, trois rouleaux 13, 14 sont disposés de part et d'autre de la génératrice correspondant à la ligne de soudure. Les axes des rouleaux 13, 14 sont inclinés sur la direction de la ligne de soudure de manière à former un angle aigu tourné vers l'aval. Les rouleaux 13, 14 contribuent à appliquer les bords 2a, 2b l'un contre l'autre. La partie de l'entonnoir 10, au niveau des rouleaux 12 et 13, est essentiellement cylindrique, échancrée dans sa partie supérieure pour permettre le passage des rouleaux.

A la sortie de l'entonnoir 10 l'enveloppe de mousse de matière plastique 2 contenant la gaine 3 continue sa progression sur un support 15, formé par des cylindres rotatifs, et passe sous un dispositif de marquage 16.

Le complexe tubulaire constitué par la gaine 3, contenant éventuellement le tube 4, entourée par l'enveloppe 2, est mis sous forme de couronne 17 sur un enrouleur 18.

La bande de mousse 2 est appliquée contre la gaine 3 à une température relativement faible de sorte qu'elle ne colle pas à la gaine 3, ou plus généralement à l'élément entouré par cette enveloppe 2. Dans le cas où la gaine 3 est annelée, elle exerce une action de freinage vis-à-vis de l'enveloppe 2. Un tel effet de freinage n'est pas aussi marqué avec une gaine à surface cylindrique lisse.

En variante, au lieu d'alimenter la bande 2 sous forme de bobine 8 comme illustré sur Fig.4, on peut prévoir une extrusion de la mousse de matière plastique sous forme de bande 2 à proximité de l'élément à enrober. La vitesse de défilement de l'élément, par exemple la gaine 3, est la même que la vitesse d'extrusion de la mousse. L'application de la mousse extrudée contre la gaine 3 est réalisée lorsque la mousse est suffisamment refroidie pour que sa température soit acceptable par la gaine 3 en matière thermoplastique tel que polypropylène, , etc.

Du fait que l'enveloppe de mousse 2 n'est pas collée sur l'élément intérieur (tube 1 ou gaine 3 ), il est possible pour un installateur de repousser ou de découper facilement l'enveloppe de mousse sur une certaine longueur pour dégager le tube intérieur en vue du raccordement à un appareil.

L'enveloppe de mousse 2, en particulier la soudure des bords 2a, 2b est réalisée de matière étanche pour éviter que des laitiers de ciment ne pénètrent à l'intérieur de cette enveloppe lorsque du béton est coulé, car il y aurait perte d'isolation. L'enveloppe de mousse 2 et la gaine 3 ont également pour fonction de résister à l'écrasement lorsque la chape est coulée.

L'enveloppe de mousse 2 peut être en polyuréthane ou en polyéthylène réticulé, ou en PEHD non réticulé.

Dans le cas d'un polyéthylène réticulé, le polyéthylène est extrudé à l'état non réticulé, la mousse contenant les ingrédients nécessaires, connus, à la réticulation. Cette réticulation se fait dans la couche de mousse 2, mise en forme autour de la gaine 3 ou de l'élément 1, par hydrolyse par exemple à l'air ambiant.

L'assemblage des bords 2a, 2b lorsqu'on utilise pour la mousse un polyéthylène réticulé ou un PEHD, est assuré par soudure. Si on utilise une mousse de polyuréthane, les bords 2a, 2b sont assemblés par collage.

Les couronnes 17 du complexe tubulaire C formé du tube 4 de polyéthylène réticulé, de la gaine 3 et de l'enveloppe 2 peuvent atteindre des longueurs de 200 mètres. La longueur du complexe mis en couronne est variable selon le diamètre du tube caloporteur et peut aller de 10 mètres pour les gros diamètres ( supérieurs à 50 mm) à 200 mètres pour les plus petits diamètres.

Lorsqu'un tel ensemble est noyé dans une dalle ou une chape de béton, le tube 4 est isolé thermiquement par l'enveloppe 2 de mousse de matière plastique et est protégé mécaniquement par la gaine 3. Le tube 4 peut être tiré et extrait par coulissement dans la gaine 3. Son remplacement est assuré en tirant un tube neuf à l'intérieur de la gaine 3.

La mousse 2 est de préférence du type à cellules fermées. Le complexe C constitué par le tube 4, la gaine 3 et l'enveloppe 2 est prévu pour un enroulement en couronne suivant un rayon de courbure de cinq fois le diamètre nominal du tube 4, sans arrachement ni déchirure de la mousse 2.

Le système hydrocablé réalisé avec le complexe tubulaire de l'invention peut être utilisé pour des installations de chauffage et/ou de rafraîchissement (radiateurs, convecteurs, ventilo-convecteurs, aérothermes...) et pour la distribution des eaux chaudes ou froides sanitaires.

## Revendications

1. Procédé pour entourer une gaine (3) en matière plastique pouvant contenir un tube (4) qui peut être tiré dans cette gaine, par une couche de mousse de matière plastique, en particulier isolante thermiquement, suivant lequel on prépare une bande (2) de mousse dont la largeur (L) est sensiblement égale au périmètre de la section transversale de l'élément (1,3) à entourer , on applique la bande (2), suivant sa largeur, autour de l'élément, et on assemble par soudage ou collage les deux bords longitudinaux (2a,2b) de la bande, procédé dans lequel
on applique la bande (2) contre la gaine (3) à une température relativement faible de sorte qu'elle ne colle pas à la gaine (3), et avec un serrage relatif de la gaine, en mettant en contact les bords longitudinaux (2a,2b) de la bande, le serrage exercé par l'enveloppe de mousse étant suffisant pour que la gaine (3) entourée ne glisse pas lors des manipulations d'un installateur, en particulier suffisant pour que l'enrobage de mousse reste en place lorsque la gaine est disposée debout.

2. Procédé selon la revendication 1, **caractérisé par le fait que** la gaine (3) est annelée.

3. Procédé selon la revendication 1 ou 2, **caractérisé par le fait que** l'enveloppe de mousse est réalisée étanche aux laitiers de ciment.

4. Procédé selon l'une des revendications 1 à 3, **caractérisé par le fait que** la gaine (3) est en PVC, PP ou PE.

5. Procédé selon l'une des revendications 1 à 4, **caractérisé par le fait qu'**il se déroule en continu.

6. Procédé selon la revendication 5, **caractérisé par le fait que** l'on fait défiler la gaine (3), on fait défiler la bande (2) à la même vitesse , on réalise l'application de la bande autour de la gaine en un emplacement déterminé (10) et , en aval de cet emplacement, on réalise le soudage ou le collage des bords longitudinaux (2a,2b) de la bande.

7. Procédé selon la revendication 6, **caractérisé par le fait que** la bande est préparée par extrusion de mousse à proximité de la gaine à entourer.

8. Procédé selon la revendication 6 ou 7, **caractérisé par le fait que** la gaine (3) à entourer et la bande (2) sont tirées en appui l'une contre l'autre, en particulier à partir de bobines (6,8) qui sont déroulées, et la bande (2) est appliquée autour de la gaine (3) en traversant un dispositif (10) en forme d' entonnoir comportant une fente longitudinale (11) dans une zone correspondant aux bords longitudinaux en appui de la bande , les bords (2a,2b) de la bande étant soudés au droit de cette fente (11).

9. Procédé selon la revendication 8, **caractérisé par le fait que** des rouleaux de contact (13,14) sont prévus en aval de la zone de soudure.

10. Procédé selon l'une des revendications précédentes, **caractérisé par le fait que** le soudage des bords (2a,2b) de la bande de mousse est réalisé par soufflage d'air chaud.

11. Procédé selon l'une des revendications précédentes, **caractérisé par le fait que** la bande (2) de mousse est en mousse de polyuréthane ou en mousse de PEND (polyéthylène haute densité) non réticulé.

12. Procédé selon l'une des revendications 1 à 10, **caractérisé par le fait que** la bande (2) de mousse est en PE (polyéthylène) extrudé à l'état non réticulé, avec ingrédients nécessaires à la réticulation, laquelle se produit dans la bande de mousse mise en forme, par hydrolyse, par exemple à l'air ambiant.

13. Complexe tubulaire **caractérisé par le fait qu'**il comporte une enveloppe (2) en mousse de matière plastique et, à l'intérieur de l'enveloppe, une gaine (3) en matière plastique serrée sans collage de l'enveloppe, la gaine pouvant contenir un tube (4) qui peut être tiré dans cette gaine.

14. Complexe tubulaire selon la revendication 13, **caractérisé par le fait que** l'enveloppe (2) comporte une ligne d'assemblage de bords (2a, 2b) par soudage ou collage, suivant une génératrice.

15. Complexe tubulaire selon la revendication 13 ou 14, **caractérisé par le fait que** la gaine (3) comporte à l'intérieur, sur toute sa longueur, un fil de traction, en particulier un fil d'acier.

16. Complexe tubulaire selon la revendication 13 ou 14, **caractérisé par le fait qu'**un tube (4) est disposé à l'intérieur de la gaine dans laquelle il peut coulisser.

17. Complexe tubulaire selon l'une des revendications 13 à 16, **caractérisé par le fait que** la gaine (3) est annelée.

18. Complexe tubulaire selon la revendication 16, **caractérisé par le fait que** le tube (4) est en polyéthylène réticulé.

19. Complexe tubulaire selon l'une des revendications 13 à 18, **caractérisé par le fait que** le serrage exercé par l'enveloppe de mousse est suffisant pour que la gaine (3) entourée ne glisse pas lors des manipulations d'un installateur, en particulier suffisant pour que l'enrobage de mousse reste en place lorsque la gaine est disposée debout.

20. Complexe tubulaire selon l'une des revendications 14 à 19 , dans lequel l'enveloppe en mousse a été obtenue par un procédé selon l'une des revendications 1 à 12.

## Claims

1. Process for wrapping a plastic sheath (3), able to contain a tube (4) that can be pulled into this sheath, with a layer of plastic foam, in particular one which is thermally insulating, in which a foam strip (2) is prepared whose width (L) is substantially equal to the perimeter of the cross section of the element (1, 3) to be wrapped, the strip (2) is applied, across its width, around the element and the two longitudinal edges (2a, 2b) of the strip are joined together by welding or adhesive bonding, in which process the strip (2) is applied against the sheath (3) at a relatively low temperature so that it does not bond to the sheath (3), and with relative gripping of the sheath, by bringing the longitudinal edges (2a, 2b) of the strip into contact with each other, the gripping exerted by the foam wrapper being sufficient for the wrapped sheath (3) not to slip when being handled by an installer, in particular sufficient for the foam covering to remain in place when the sheath is placed upright.

2. Process according to Claim 1, **characterized in that** the sheath (3) is annulate.

3. Process according to Claim 1 or 2, **characterized in that** the foam wrapper is made impermeable to cement slurries.

4. Process according to one of Claims 1 to 3, **characterized in that** the sheath (3) is made of PVC, PP or PE.

5. Process according to one of Claims 1 to 4, **characterized in that** it is carried out continuously.

6. Process according to Claim 5, **characterized in that** the sheath (3) is made to run, the strip (2) is made to run at the same speed, the strip is applied around the sheath at a defined point (10) and, downstream of this point, the longitudinal edges (2a, 2b) of the strip are welded or adhesively bonded together.

7. Process according to Claim 6, **characterized in that** the strip is prepared by foam extrusion near the sheath to be wrapped.

8. Process according to Claim 6 or 7, **characterized in that** the sheath (3) to be wrapped and the strip (2) are pulled, so as to bear against each other, in particular from wheels (6, 8) that are unwound, and the strip (2) is applied around the sheath (3) by passing through a funnel-shaped device (10) having a longitudinal slot (11) in a region corresponding to the place where the longitudinal edges of the strip bear against each other, the edges (2a, 2b) of the strip being welded together in line with this slot (11).

9. Process according to Claim 8, **characterized in that** contact rollers (13, 14) are provided downstream of the welding region.

10. Process according to one of the preceding claims, **characterized in that** the edges (2a, 2b) of the foam strip are welded together by blowing hot air.

11. Process according to one of the preceding claims, **characterized in that** the foam strip (2) is made of an uncrosslinked HDPE (high-density polyethylene) foam or polyurethane foam.

12. Process according to one of Claims 1 to 10, **characterized in that** the foam strip (2) is made of PE (polyethylene) extruded in the uncrosslinked state, with necessary ingredients for the crosslinking, which crosslinking takes place in the formed foam strip by hydrolysis, for example in the ambient air.

13. Tubular complex, **characterized in that** it comprises a plastic foam wrapper (2) and, inside the wrapper, a plastic sheath (3) gripped, with no bonding, by the wrapper, the sheath possibly containing a tube (4) that can be pulled into this sheath.

14. Tubular complex according to Claim 13, **characterized in that** the wrapper (2) has a join line, where the edges (2a, 2b) are joined together by welding or adhesive bonding, along a generatrix.

15. Tubular complex according to Claim 13 or 14, **characterized in that** the sheath (3) has, inside, over its entire length, a pull wire, in particular a steel wire.

16. Tubular complex according to Claim 13 or 14, **characterized in that** a tube (4) is placed inside the sheath, in which the tube can slide.

17. Tubular complex according to one of Claims 13 to 16, **characterized in that** the sheath (3) is annulate.

18. Tubular complex according to Claim 16, **characterized in that** the tube (4) is made of crosslinked polyethylene.

19. Tubular complex according to one of Claims 13 to 18, **characterized in that** the gripping exerted by the foam wrapper is sufficient for the wrapped sheath (3) not to slip when being handled by an installer, in particular sufficient for the foam covering to remain in place when the sheath is placed upright.

20. Tubular complex according to one of Claims 14 to 19, in which the foam wrapper has been obtained by a process according to one of Claims 1 to 12.

## Patentansprüche

1. Verfahren zum Umgeben einer Hülle (3) aus Kunststoffmaterial, die ein Rohr (4) enthalten kann, das in dieser Hülle gezogen werden kann, mit einer Schicht aus einem insbesondere thermisch isolierenden Kunststoffschaum, gemäß dem ein Schaumstoffband (2) vorbereitet wird, dessen Breite (L) im wesentlichen gleich dem Umfang des Querschnitts des zu umgebenden Elements (1, 3) ist, das Band (2) gemäß seiner Breite um das Element aufgelegt wird und durch Schweißen oder Kleben die beiden Längsränder (2a, 2b) des Bands zusammengefügt werden, Verfahren, bei dem das Band (2) bei relativ geringer Temperatur auf die Hülle (3) aufgelegt wird, so daß es nicht an der Hülle (3) klebt, und mit einem relativen Umklammern der Hülle, indem die beiden Längsränder (2a, 2b) des Bands in Kontakt gebracht werden, wobei das vom Schaumstoffmantel ausgeübte Umklammern ausreicht, damit die umgebene Hülle (3) bei Manipulationen durch einen Installateur nicht gleitet, und insbesondere ausreicht, damit der Schaumstoffmantel in Stellung bleibt, wenn die Hülle aufrecht angeordnet wird.

2. Verfahren nach Anspruch 1, **dadurch gekennzeichnet, daß** die Hülle (3) quergerillt ist.

3. Verfahren nach Anspruch 1 oder 2, **dadurch gekennzeichnet, daß** der Schaumstoffmantel gegenüber Zementschlacke dicht hergestellt ist.

4. Verfahren nach einem der Ansprüche 1 bis 3, **dadurch gekennzeichnet, daß** die Hülle (3) aus PVC, PP oder PE ist.

5. Verfahren nach einem der Ansprüche 1 bis 4, **dadurch gekennzeichnet, daß** es kontinuierlich abläuft.

6. Verfahren nach Anspruch 5, **dadurch gekennzeichnet, daß** die Hülle (3) vorwärtsbewegt wird, das Band (2) mit gleicher Geschwindigkeit vorwärtsbewegt wird, das Aufbringen des Bands um die Hülle an einer bestimmten Stelle (10) durchgeführt wird, und stromabwärts hinter dieser Stelle das Schweißen oder Kleben der Längsränder (2a, 2b) des Bands durchgeführt wird.

7. Verfahren nach Anspruch 6, **dadurch gekennzeichnet, daß** das Band durch Schaumstoffextrudieren in der Nähe der zu umgebenden Hülle hergestellt wird.

8. Verfahren nach Anspruch 6 oder 7, **dadurch gekennzeichnet, daß** die zu umgebende Hülle (3) und das Band (2) in Auflage aufeinander gezogen werden, insbesondere ausgehend von Spulen (6, 8), die abgewickelt werden, und das Band (2) um die Hülle (3) gelegt wird, indem sie eine trichterförmige Vorrichtung (10) durchqueren, die einen Längsschlitz (11) in einer Zone entsprechend den aufliegenden Längsrändern des Bands aufweist, wobei die Ränder (2a, 2b) des Bands vor diesem Schlitz (11) verschweißt werden.

9. Verfahren nach Anspruch 8, **dadurch gekennzeichnet, daß** Kontaktrollen (13, 14) stromabwärts hinter der Schweißzone vorgesehen sind.

10. Verfahren nach einem der vorhergehenden Ansprüche, **dadurch gekennzeichnet, daß** das Verschweißen der Ränder (2a, 2b) des Schaumstoffbands durch Aufblasen von warmer Luft erfolgt.

11. Verfahren nach einem der vorhergehenden Ansprüche, **dadurch gekennzeichnet, daß** das Schaumstoffband (2) aus Polyurethanschaum oder aus nicht vernetztem PEHD-Schaum (hochdichtes Polyethylen) besteht.

12. Verfahren nach einem der Ansprüche 1 bis 10, **dadurch gekennzeichnet, daß** das Schaumstoffband (2) aus im nicht vernetzten Zustand extrudiertem PE (Polyethylen) mit den für die Vernetzung notwendigen Bestandteilen besteht, wobei die Vernetzung im geformten Schaumstoffband durch Hydrolyse, zum Beispiel bei Umgebungsluft, stattfindet.

13. Rohrförmiger Komplex, **dadurch gekennzeichnet, daß** er einen Schaumstoffmantel (2) aus Kunststoffschaum und innerhalb des Mantels eine Hülle (3) aus Kunststoffmaterial aufweist, die ohne Kleben vom Mantel umklammert wird, wobei die Hülle ein Rohr (4) enthalten kann, das in dieser Hülle gezogen werden kann.

14. Rohrformiger Komplex nach Anspruch 13, **dadurch gekennzeichnet, daß** der Mantel (2) eine Linie zum Zusammenfügen der Ränder (2a, 2b) durch Schweißen oder Kleben entlang einer Mantellinie aufweist.

15. Rohrformiger Komplex nach Anspruch 13 oder 14, **dadurch gekennzeichnet, daß** die Hülle (3) innen über ihre ganze Länge einen Zugdraht aufweist, insbesondere einen Stahldraht.

16. Rohrförmiger Komplex nach Anspruch 13 oder 14, **dadurch gekennzeichnet, daß** ein Rohr (4) innerhalb der Hülle angeordnet ist, in der es gleiten kann.

17. Rohrförmiger Komplex nach einem der Ansprüche 13 bis 16, **dadurch gekennzeichnet, daß** die Hülle (3) quergerillt ist.

18. Rohrförmiger Komplex nach Anspruch 16, **dadurch gekennzeichnet, daß** das Rohr (4) aus vernetztem Polyethylen ist.

19. Rohrförmiger Komplex nach einem der Ansprüche 13 bis 18, **dadurch gekennzeichnet, daß** das vom Schaumstoffmantel durchgeführte Umklammern ausreicht, damit die umgebene Hülle (3) bei Manipulationen durch einen Installateur nicht gleitet, und insbesondere ausreicht, damit der Schaumstoffmantel in Stellung bleibt, wenn die Hülle aufrecht angeordnet wird.

20. Rohrförmiger Komplex nach einem der Ansprüche 14 bis 19, **dadurch gekennzeichnet, daß** der Schaumstoffmantel durch ein Verfahren gemäß einem der Ansprüche 1 bis 12 erhalten wurde.
